# EUROPEAN PATENT APPLICATION

(11) **EP 2 966 043 A2**
(43) Date of publication of application: **13.01.2016**
(21) Application number: 15175703.6
(22) Date of filing: 07.07.2015
(51) Int. Cl.: C02F 1/52, C02F 1/00

(54) **INFLUENT FEED SYSTEM (IFS) AND GRIT BOX FOR WATER CLARIFICATION SYSTEMS**

(30) Priority: 08.07.2014 US 201414325421
(71) Applicant: ClearCove Systems, Inc., Rochester, NY 14623 (US)
(72) Inventor: WRIGHT, Terry, Rochester, NY New York 14610 (US)
(74) Representative: Carstens, Dirk Wilhelm

(57) **Abstract**

An influent feed system to classify and separate particulate matter and solvated materials from an influent stream includes one or more influent feed troughs in fluid communication with a clarification tank. One or more grit boxes are in fluid communication with the one or more influent feed troughs. The one or more grit boxes include a hopper (506) for accumulation of materials to be deposited. The hopper (506) has a drainage pipe (570) and a valve (580) that controls communication of materials between the influent feed system and the drainage pipe. A mechanism delivers the influent stream at a predetermined and a substantially constant flow rate. The influent stream is separated into two or more streams and recombined under pressure in the grit boxes. A grit box to classify and separate particulate matter and solvated materials from an influent stream is also described.

## Description

### CROSS-REFERENCE TO RELATED APPLICATIONS

This application is related to co-pending U.S. Patent Application Serial No. 14/142,197, METHOD AND APPARATUS FOR A VERTICAL LIFT DECANTER SYSTEM IN A WATER TREATMENT SYSTEM, and co-pending U.S. Patent Application Serial No. 14/142,099, FLOATABLES AND SCUM REMOVAL APPARATUS FOR A WASTE WATER TREATMENT SYSTEM, both of which applicationsare incorporated herein by reference in their entirety for all purposes.

### FIELD OF THE APPLICATION

The application relates to waste water separation, recovery, and clarification systems.

### BACKGROUND

During the treatment of waste water, one goal is to selectively remove and separate the various solids and dissolved materials from the influent. Waste water treatment systems are used in a number of applications including but not limited to the treatment of sewage, storm water, industrial waste, mining and agriculture. Current waste water treatment systems maintain a continuous flow of influent entering the primary settling tank and effluent exiting the primary settling tank for secondary treatment resulting in in the incomplete removal of grit, solids and particulates and little if any separation of desirable materials from undesirable materials.

### SUMMARY

According to one aspect,an influent feed system to classify and separate particulate matter and solvated materials from an influent stream includes one or more influent feed troughs in fluid communication with a clarification tank. The influent feed troughs have dimensions such that an influent feed trough fluid rise rate that is less than the settling rate of materials to be deposited in the influent feed troughs. One or more grit boxes are in fluid communication with the one or more influent feed troughs. The one or more grit boxes have grit box dimensions which result in a grit box fluid rise rate that is slow relative to the settling rate of materials to be deposited in the one or more grit boxes. The one or moregrit boxes include a hopper for accumulation of the materials to be deposited. The hopper has a drainage pipe and a valve that controls communication of materials between the influent feed system and the drainage pipe. A mechanism delivers the influent stream at a predetermined and a substantially constant flow rate. The influent stream is separated into two or more streams and recombined under pressure in the grit boxes.

In one embodiment, the influent feed system further includes an apparatus to add one or more flocculants to the influent stream before the influent stream enters the one or more influent feed troughs.

In another embodiment, the influent feed system further includes an apparatus to add one or more flocculants to the influent stream as the influent stream separated into two or more streams recombines under pressure in the grit box.

In yet another embodiment, the influent stream delivery mechanism includes a reservoir which accumulates and stores influent, and one or more pumps that pump the influent to the influent feed system and a signal source which turns the pumps on.

In yet another embodiment, the influent stream delivery mechanism includes a reservoir to accumulate and store influent. The reservoir is elevated relative to the influent feed system and in fluid communication with the influent feed system. A control valve is disposed between the reservoir and the influent feed system. The control valve is configured to deliver the influent stream at the pre-determined and substantially constant flow rate, the control valve opening in response to a signal source to permit influent to traverse under an influence of gravity to the one or more grit boxes.

In yet another embodiment, the reservoir includes a holding tower.

In another embodiment, the influent feed system further includes a flow meter that measures a flow rate of fluid wherein the system closes the valve in response to the flow rate falling below a predetermined rate.

In yet another embodiment, the influent feed system includes one or more screen box assemblies that discharge influent from a settling tank after separation of solids from the influent stream.

In yet another embodiment, at least one of the one or more influent feed troughs further comprises one or more additional drain pipes in fluid communication with the at least one of the one or more influent feed troughs and another valve disposed between the at least one of the one or more influent feed troughs and an outflow end of the at least one of the one or more additional drain pipes controls a flow of materials through the outflow end.

According to another aspect, a grit box to classify and separate particulate matter and solvated materials from an influent stream includes an upper portion and a lower portion. The upper portion has a fluid discharge mechanism. The lower portion is coupled to a drainage pipe. The lower portion has a valve that controls communication of materials between an influent feed system and the drainage pipe. One or more of the dimensions of the upper portion and the lower portion causes a fluid rise rate slow relative to the settling rate of materials to be deposited in the grit box. A deflection plate is positioned between the upper portion and the lower portion. An influent stream delivery mechanism is configured to deliver the influent stream at a predetermined and substantially constant flow rate. The influent stream is separated into two or more streams and recombined under pressure in the lower portion. A hopper accumulates one or more deposited materials.

In one embodiment, the influent is recombined under pressure in the lower portion underneath the deflection plate.

In another embodiment, the influent is recombined in a turbulent mixing zone created by streams under pressure from two or more opposing pipes.

In yet another embodiment, the influent is recombined in the turbulent mixing zone created by streams under pressure directed substantially towards each other from three or more opposing pipes that extend from a manifold at about an equal angular spacing.

In yet another embodiment, three opposing pipes extend from the manifold at about a 120 degree spacing.

In yet another embodiment, four opposing pipes extend from the manifold at about a 90 degree spacing.

In yet another embodiment, each of the opposing pipes includes a first substantially 90 degree bend about where each of the opposing pipes is coupled to the manifold and a second substantially 90 degree bend that directs streams under pressure substantially towards each other.

In yet another embodiment, the opposing pipes include four opposing pipes that extend from the manifold at about a 90 degree spacing. Each of the opposing pipes includes a first substantially 90 degree bend about where each of the opposing pipes is coupled to the manifold. A first two opposing pipes of the four opposing pipes include a second upwards bend of greater than 90 degrees that direct the streams under pressure in an upwards direction and substantially towards each other. A two remaining opposing pipes of the four opposing pipes include a second downward bend of less than 90 degrees that directs the streams under pressure in a downwards direction and substantially towards each other and the streams emanating from the first two opposing pipes.

The foregoing and other objects, aspects, features, and advantages of the invention will become more apparent from the following description and from the claims.

### BRIEF DESCRIPTION OF THE DRAWINGS

The objects and features of the applicationcan be better understood with reference to the drawings described below, and the claims. The drawings are not necessarily to scale, emphasis instead generally being placed upon illustrating the principles of the application. In the drawings, like numerals are used to indicate like parts throughout the various views.
FIG. 1 shows a block diagram of an exemplaryembodiment of a clarification system configured to selectively classify and separate grits, solids, particulates and solvated materials from an influent stream;
FIG. 2 shows a block diagram of another exemplary embodiment of a clarification system;
FIG. 3A shows a diagram of a current influent and flocculant mixing device;
FIG. 3B shows a diagram of an alternative current influent and flocculant mixing device;
FIG. 4 shows a cross section diagram of an exemplary grit box;
FIG. 5A shows an endview of an exemplary influent feed system (IFS) trough;
FIG. 5B shows analternative end view of an exemplary IFS trough;
FIG. 6 shows a side view of an exemplary IFS with IFS troughs and grit box;
FIG. 7 shows a top view of the IFS of FIG. 6;
FIG. 8A shows a diagram of a top view of an alternative configuration for mixing of influent streams in a grit box;
FIG. 8B shows a side view of the apparatus of FIG. 8A;
FIG. 9A shows a diagram of a top view of another alternative configuration for mixing of influent streams in a grit box;
FIG. 9B shows a side view of the apparatus of FIG. 9A;
FIG. 10A shows a schematic plan view of a self-cleaning influent feed system including a solid wall that acts as a weir;
FIG. 10B is an elevational cross-sectional view showing more detail of the smooth rounded weir of the system of FIG. 10A; and
FIG. 11 shows a side view of a portion of another exemplary embodiment of a clarification system.

### DETAILED DESCRIPTION

As discussed hereinabove, during the treatment of waste water, one goal is to selectively remove and separate the various solids and dissolved materials from the influent. Waste water treatment systems are used in a number of applications including but not limited to the treatment of sewage, storm water, industrial waste, mining and agriculture. Current waste water treatment systems maintain a continuous flow of influent entering the primary settling tank and effluent exiting the primary settling tank for secondary treatment resulting in in the incomplete removal of grit, solids and particulates and little if any separation of desirable materials from undesirable materials.

There is a need for a system and method which can more efficiently removegrit, solids and particulates and/or which can more efficiently separate desirable materials from undesirable materials.

U.S. Patent No. 7,972,505, PRIMARY EQUALIZATION SETTLING TANK, to Wright; U.S. Patent No. 8,225,942 to Wright,SELF-CLEANING INFLUENT FEED SYSTEMFOR A WASTEWATER TREATMENT PLANT; U.S. Patent No. 8,398,864 SCREENED DECANTER ASSEMBLY FOR ASETTLING TANKto Wright; co-pending U.S. Patent Application Ser. No. 14/142,197 METHOD AND APPARATUS FOR A VERTICAL LIFT DECANTER SYSTEM IN A WATER TREATMENT SYSTEMby Wright;and co-pending U.S. Patent Application Ser. No. 14/142,099 FLOATABLES AND SCUM REMOVAL APPARATUS FOR A WASTE WATER TREATMENT SYSTEM by Wright, all of which are incorporated by reference in their entirety for all purposes, disclose systems and processes for primary clarification that removes substantially all grit, solids and particulates larger than 50 microns during primary clarification.

As described in more detail hereinbelow, it was realized that a clarification system incorporating an improved Influent Feed System (IFS) can be used to more efficiently classify and separate grits, solids, particulates and solvated materials from an influent stream.

The IFS includes one or more grit boxes and one or more IFS troughs. The IFS can be arranged to classify solids by the creation of selected regions with predetermined influent rise velocities. Classification of solids can be done by the solids settling rates and, optionally, via the addition of flocculants to settle suspended and solvated materials. In this manner selected materials can be removed from the influent stream before it spills over the IFS Trough weir into a clarification settling tank where predominantly desirable materials are separated from the influent stream.

The low rise rate and velocities of the influent as it traverses the IFS trough and grit box en route to a clarification settling tank provide the opportunity to avoid use of a bar screen, to separate the IFS trough from the interior the settling tank. Occasionally a bar rack will be used to control large solids from entering the main settling zone of the tank.

Current waste water treatment systems often use flocculants to remove solids and solvated materials from the influent. A problem with current systems is that the devices used to provide adequate mixing of flocculants with the influent stream can result in uncontrolled settling and depositing of the flocs in undesirable locations, resulting in lower flow rates and maintenance issues associated with removing the deposits. Another problem with current systems is that during periods of high flow, or due to inadequate mixing, it may be necessary to use a ballasted floc reactor to assist with primary clarification. In a ballasted floc reactor sand is added as ballast in addition to the flocculants to achieve necessary deposition of solids and solvated materials from the influent stream. Sand is an undesirable additive as it creates expense and adds volume to the deposits.

The mixing of the flocculants and influent can be controlled to cause deposition of the floc in a predetermined portion of the IFS. By depositing floc in a predetermined portion of the IFS, system maintenance can be substantially minimized.

In one exemplary embodiment, the influent entering the IFS first enters a grit box. The influent stream is split into two or more separate streams which are then recombined under pressure to create a turbulent mixing of the recombined streams with a flocculent. Flocculants are added to the influent prior to influent entering the IFS, in the IFS or in the grit box. The turbulent mixing promotes rapid action of the flocculent with the solids and/or solvated materials, reducing or eliminating the need for sand and results in the deposition of the flocs in a controlled portion of the clarification system. The grit box has a turbulence deflector which is a curved or angular plate to return upward velocities back into the main mixing zone.

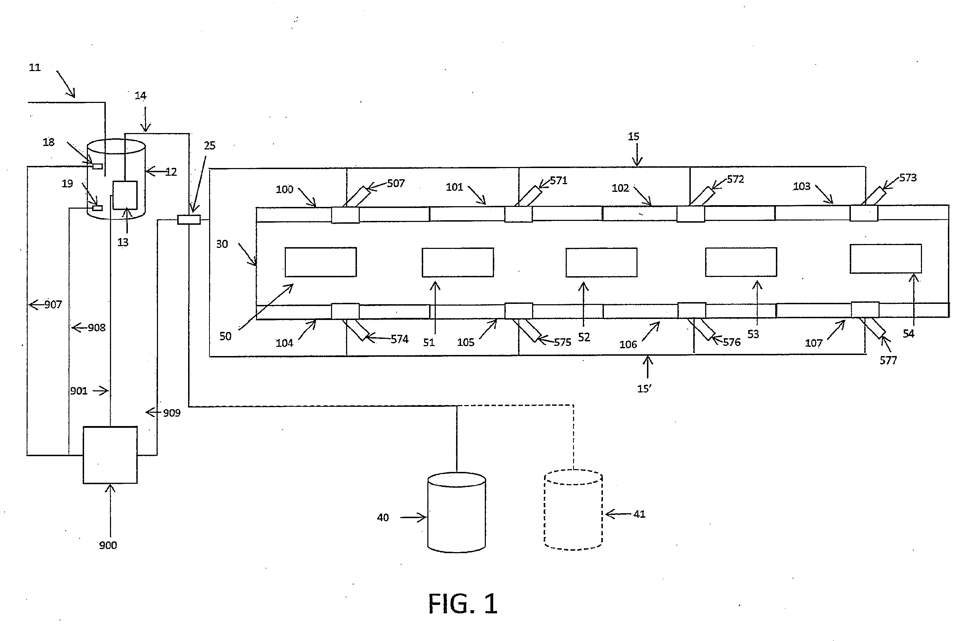

FIG. 1 shows a block diagram of one exemplary embodiment of aclarification system 1 configured to selectively classify and separate grits, solids, particulates and solvated materials from an influent stream.In one embodiment, the influent enters the clarification system 1 via pipes 11 where it is stored in wet well 12. A settling tank 30 is in fluid communication with 8 IFS's, 100-107. Pump 13 pumps influent from the wet well 12 to IFS's 100-107 at a substantially constant flow rate via piping 14, 15 and 15'. In one embodiment pump 13 operates under the control of a supervisory control and data acquisition system (SCADA) 900 in communication with pump 13 via communication channel 901.In one embodiment the SCADA 900 turns pump 13 on in response to an indication of the wet well 12 fluid level reaching an upper limit, the indication provided by sensor 18 in communication with SCADA 900 via communication channel 907. In one embodiment SCADA 900 turns pump 13 off in response to an indication of the wet well 12 fluid level reaching a lower limit, the indication provided by sensor 19 in communication with SCADA 900 via communication channel 908. In an alternative embodiment SCADA 900 turns pump 13 off after a pre-determined period of time. In an alternate embodiment SCADA 900 turns pump 13 off after a predetermine volume of fluid has been pumped as indicated by measuring the flow via signals provided by flow meter 25 in communication with SCADA 900 via communication channel 909. Flow meters and sensors to measure fluid level are well known in the art.

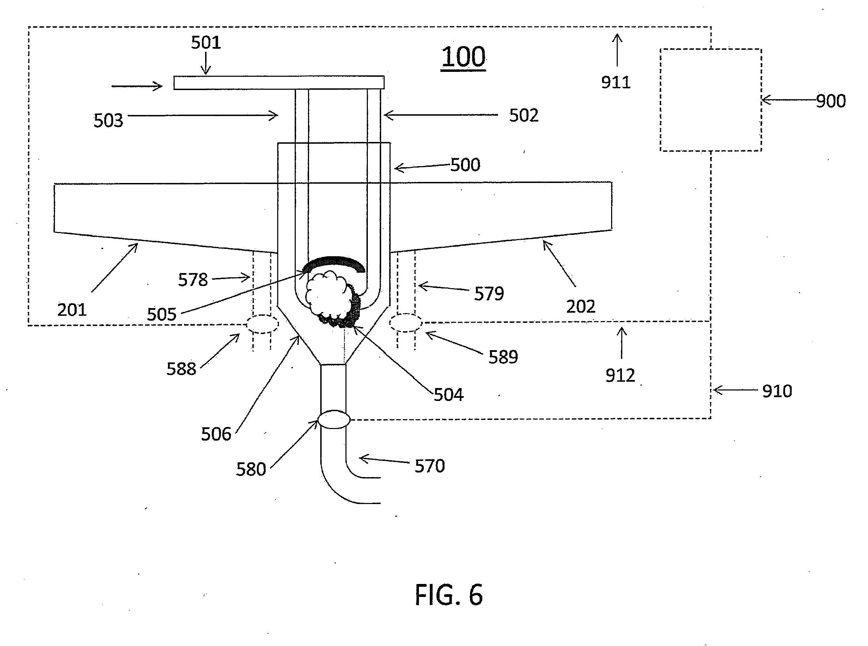

As is well known in the art, piping 14, 15 and 15' is configured to deliver substantially the same flow rate of influent to each IFS 100-107. Flow balancing valves and/or flow splitting may be used. The influent enters the IFS's 100-107 where grits, solids, and optionally solvated materials, are selectively classified and separated from the influent via settling and optional flocculation. Materials settled in the IFS's 100-107 are removed via discharge pipes 570-577 as described in more detail with reference to FIG. 6. The influent traverses the IFS's 100-107 to enter the clarification settling tank 30. As described in the, '505 patent, '864 patent and '197 application, solids remaining in the influent traversing to the clarification settling tank 30 are further classified and separated from the influent via settling. Upon completion of the separation of the solids from the influent, the influent is discharged from the settling tank 30 using screen box assemblies (SBX's) 50-54 as described in the '197 application.

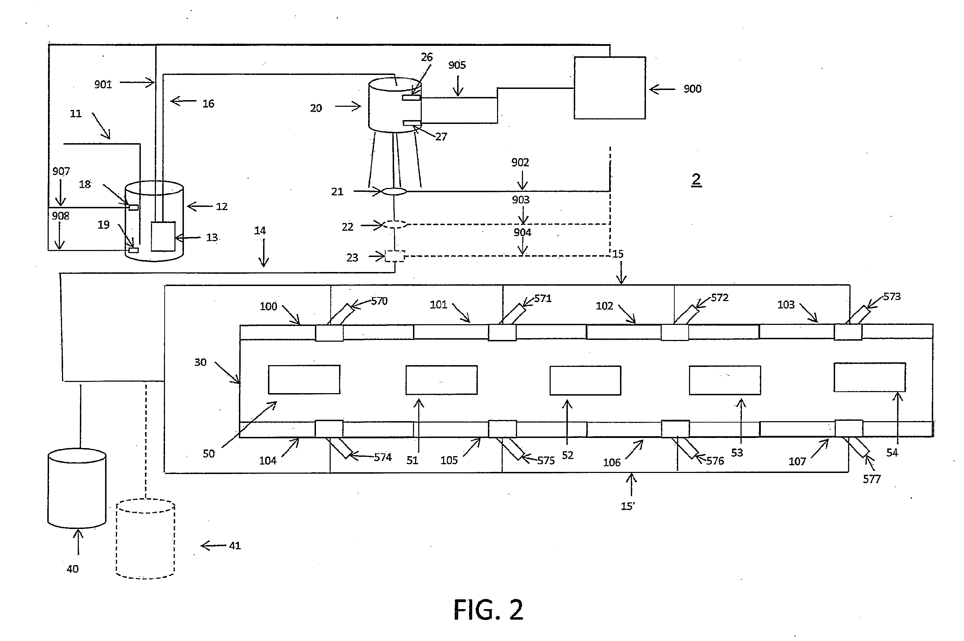

FIG. 2 shows a block diagram of another exemplary embodiment of a clarification system 2configured to selectively classify and separate grits, solids, particulates and solvated materials from an influent stream. In the embodiment of FIG. 2, pump 13 pumps influent from the wet well 12 via piping 16 to influent holding tower 20. In one embodiment pump 13 operates under the control of a supervisory control and data acquisition system (SCADA) 900 in communication with pump 13 via communication channel 901.Holding tower 20stores influent at an elevated position relative to the IFS's 100-107. Periodically, valve 21 is opened and influent is discharged from the influent holding tower 20 under the influence of gravity, traversing piping 14, 15 and 15' at pre-determined and substantially constant range of flow rates to enter the IFS's 100-107. In one embodiment valve 21 is under control of and in communication with SCADA 900 via communication channel 902. In one embodiment, SCADA 900 sends a signal via communication channel 902 to open valve 21 in response to sensor 26 sending a signal to SCADA 900 via communication channel 905 indicating the fluid level in holding tower 20 is at or above a pre-determined limit. Sensors to measure fluid level are well known in the art.

In one embodiment, a flow meter 23 placed on pipe 14 in communication with SCADA 900 via communication channel 904 is used to monitor the rate of flow of fluid flowing from holding tower 20. Modulating valve/gate 22 are placed on pipe 14 under the control of SCADA 900 via communication channel 903 is used to regulate the flow within predetermined limit and compensate for variations in the head pressure that result from changes in the fluid of the influent holding tower 20 level as influent is discharged.

In one embodiment SCADA 900 closes valve 21 in response to an indication of the holding tower 20 fluid level reaching a lower limit, the indication provided by fluid level sensor 27 in communication with SCADA 900 via communication channel 902. In an alternative embodiment SCADA 900 closes valve 21 after a pre-determined period of time. In an alternate embodiment SCADA 900 closes valve 21 after a predetermine volume of fluid has traversed pipe 14 as determined from measuring the total flow via signals provided by flow meter 23 in communication with SCADA 900 via communication channel 904. In an alternative embodiment SCADA 900 closes valve 21 when the flow rate falls below a predetermine flow rate as indicated by a signal provided by flow meter 23 in communication with SCADA 900 via communication channel 904

In the embodiments of FIG. 1 and FIG. 2, flocculants are optionally added to the influent stream by flocculent delivery systems 40, 41. The use of flocculants, for the removal of solids and solvated materials in the treatment of waste water and designs to add flocculants to an influent waste water stream are well known in the art. Flocculants are most effective when they are adequately mixed with the influent.

Current systems often add chemical flocculants to the influent as it enters the IFS on route to the primary treatment tank. The chemical flocculants precipitate soluble constituents and combine with other solids to promote the rapid settling of solids in the primary treatment tank. During peak flow periods, such as during a rain storm, the influent flow rate may be too high for other technologies to provide adequate mixing of the chemical flocculants and/or settling of the solids during the shortened dwell time of the influent in the primary treatment tank. To further promote rapid settlement of solids in the primary treatment it may be necessary touse a ballasted floc reactor to assist with primary clarification during periods of peak fluid flow. In a ballasted floc reactorsand is added to the influent to act as ballast in addition to the flocculent to promote rapid settling. Sand is an undesirable additive as it can clog pipes, settles in the tank and adds to the sludge production, contributes cost and adds inefficiencies to removal and treatment of the settled solids.

Current systems use a variety of techniques to mix flocculants with influent streams. A problem with current systems is that the devices used to provide adequate mixing of flocculants with the influent stream can readily foul as rags and large solids can plug the small passage ways that induce turbulence or wrap around mixers resulting in excess chemical use and/or interrupted flow during maintenance of the static or dynamic mixers.

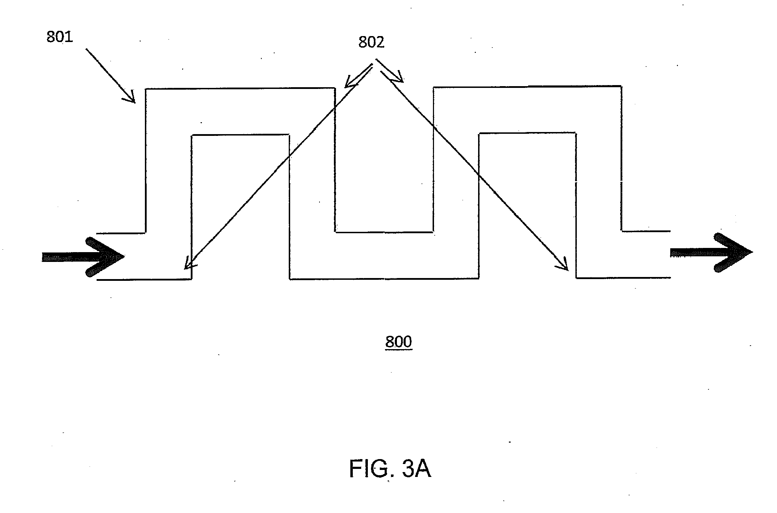

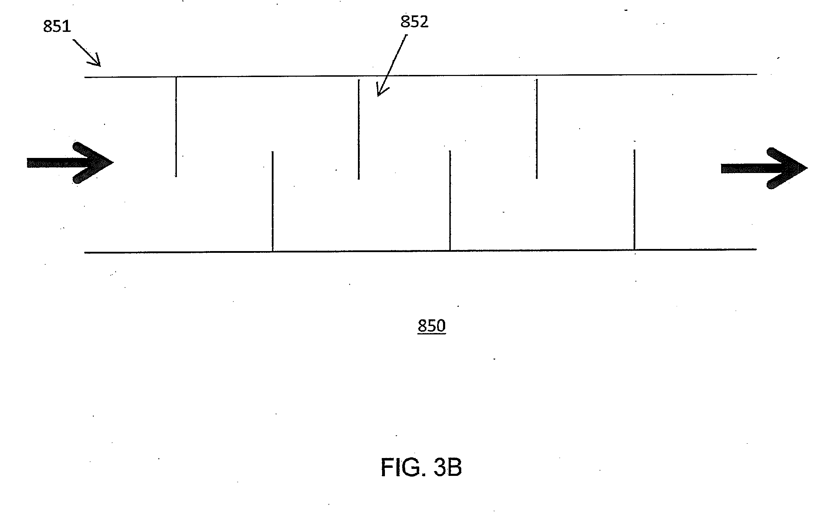

Examples of current systems with these short comings are provided in FIG. 3A and FIG. 3B. FIG. 3A shows a diagram of a current influent and flocculent mixing device. FIG. 3B shows a diagram of an alternative current influent and flocculent mixing device. Currents systems 800, FIG. 3A and 850, FIG. 3B, rely upon creating zones of turbulence 802, 852 to mix the flocculent and influent in the piping 801, FIG. 3Aand 851, FIG. 3B used to transport the influent and flocculent through the clarification system to the region where settlingis desired. Over time, the mixing of influent and flocculants prior to the region of the clarification systems where settlingof the floc is desired results in deposits that impact the influent flow rate resulting in the need to perform costly and time-consuming maintenance.

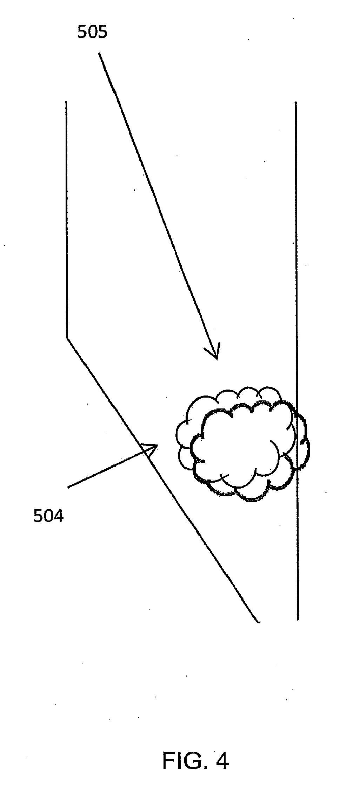

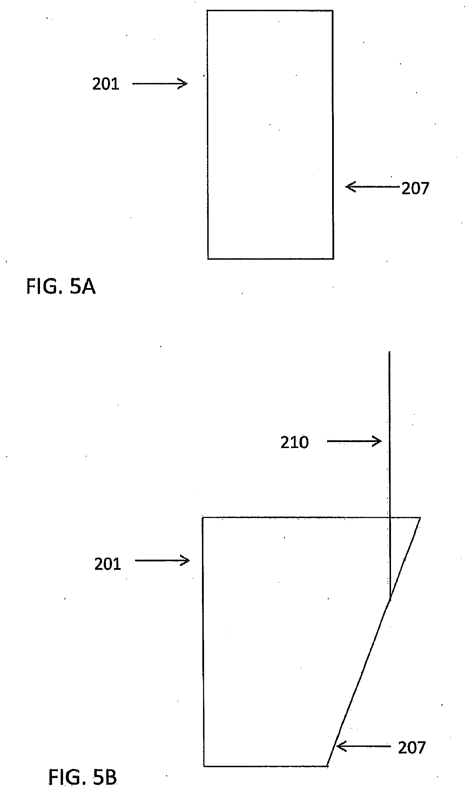

FIG. 4 shows a cross section diagram of an exemplary grit box. FIG. 5A shows a side view of an exemplary influent feed system (IFS) trough. FIG. 5B shows an end view of an alternative embodiment of an IFS trough.

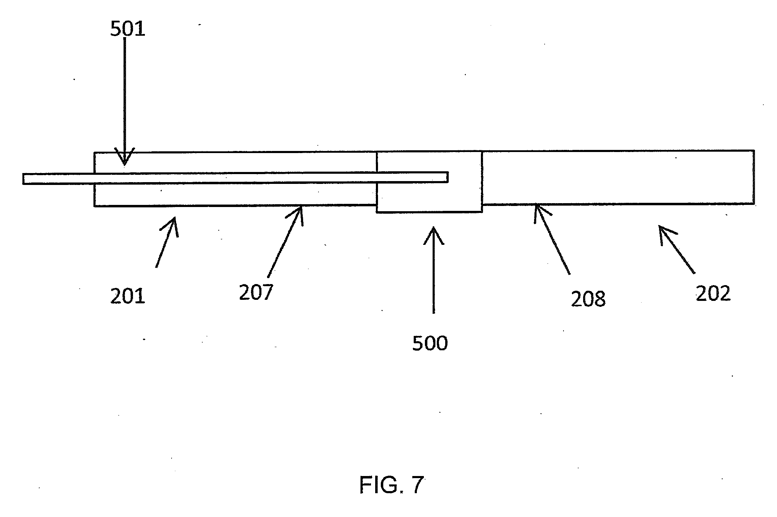

FIG. 6 shows a side view of an exemplary IFS 100 with IFS troughs and grit box. FIG. 7 shows a top view of the IFS of FIG. 6. According to the new system and method, a mixing zone is created within a grit box 500 at the location where deposition of the floc is desired. With reference to FIG. 6and FIG. 7, IFS 100 is configured with a grit box 500 and two IFS troughs 201, 202, having trough walls 207, 208. IFS troughs 201, 202 are in fluid communication with the grit box 500. Influent is delivered to the IFS 100 via pipe 501 and split into two streams which enter the grit box 500 via pipes 502, 503. The streams exit opposing pipes 502, 503 and collide under pressure to create a turbulent mixing zone 504. A deflector plate 505 is positioned above the mixing zone 504 to confine the volume of the mixing zone and return the upward velocities of the streams existing pipes 502, 503 back into the Mixing Zone 504. Grit, dense solids and floc are deposited in the grit box hopper 506.

To limit disturbance of solids settling in the lower portion of the IFS troughs 201, 202 in proximity to the grit box 500, the length of the pipes 502, 503 is arranged to position the mixing zone 504 below the lowest portion of the IFS troughs 201, 202 in proximity to and in fluid communication with the grit box 500. The mixing zone 504 and grit box hopper 506 are positioned below the lowest portion of the IFS troughs 201, 202 in proximity to and in fluid communication with the grit box 500. Solids with a lower settling rate than the designed influent rise velocity in the grit box hopper 506 move into the IFS troughs 201, 202. Additionally, prior to entering the IFS troughs 201,202, the solids moving upward under the influence of the rising influent undergo a 90 degree change in direction, turning from vertical to horizontal thus losing inertia and lessening the fluid forces on the suspended grits, solids and floc.

To improve the mixing in the mixing zone 504 and further limit disturbance of solids settling in the IFS troughs 201, 202 in proximity to and in fluid communication with the grit box 500 a deflection plate 505 is positioned above the mixing zone 504. In one embodiment, the deflection plate 505 is a curved or angular plate to keep sludge from settling on top of the deflection plate 505 and to return mixing velocities to mixing zone 504.

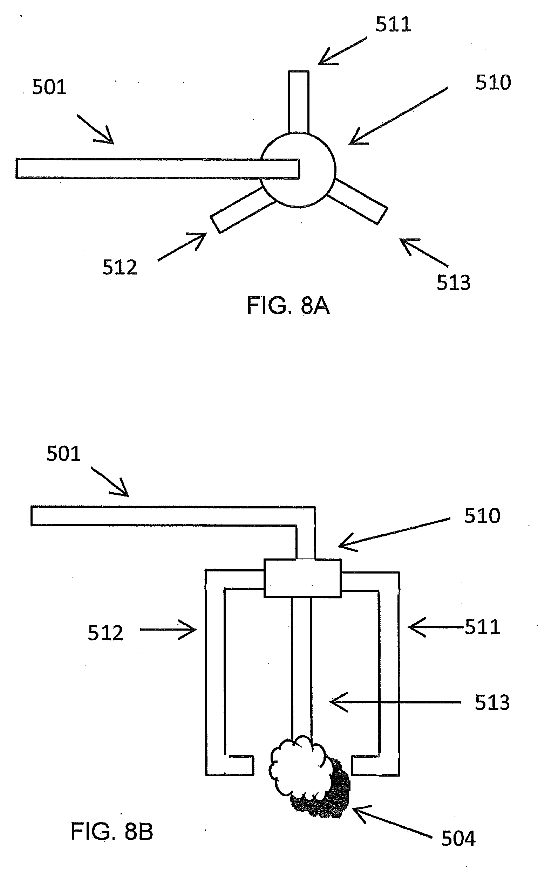

FIG. 8A shows a diagram of a top view of an alternative configuration for mixing of influent streams in a grit box. FIG. 8B shows a side view of the apparatus of FIG. 8A. In the alternate embodiment of FIG. 8A and FIG. 8B, pipe 501 is in fluid communication with a manifold 510 that further splits the influent stream into three streams which enter the Grit Box 500 via pipes 511, 512, 513 arranged radially around manifold 510 at positions 120 degrees from one another. The influent streams exit the pipes 511, 512, 513 to collide to create a turbulent mixing zone 504.

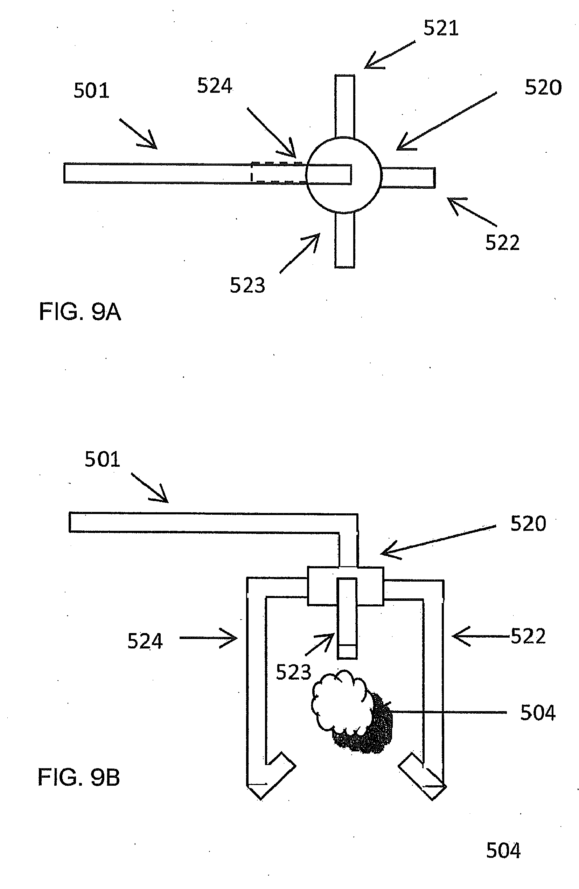

FIG. 9A shows a diagram of a top view of another alternative configuration for mixing of influent streams in a grit box. FIG. 9B shows a side view of the apparatus of FIG. 9A. In the alternate embodiment of FIG. 9A and FIG. 9B, pipe 501 is in fluid communication with a manifold 520 that further splits the influent stream which enter the grit box 500 into four streams via pipes 521, 522, 523, 524 arranged radially around manifold 510 at positions 90 degrees from one another. In some embodiments, pipes 522 and 524are longer than pipes 521 and 523, and fabricated to cause the exiting influent to be ejected in an upwards direction to mixing zone 504. Pipes 521 and 523 are fabricated to cause the exiting influent to be ejected in a downwards direction to mixing zone 504. The four streams collide to create a turbulent Mixing Zone 504

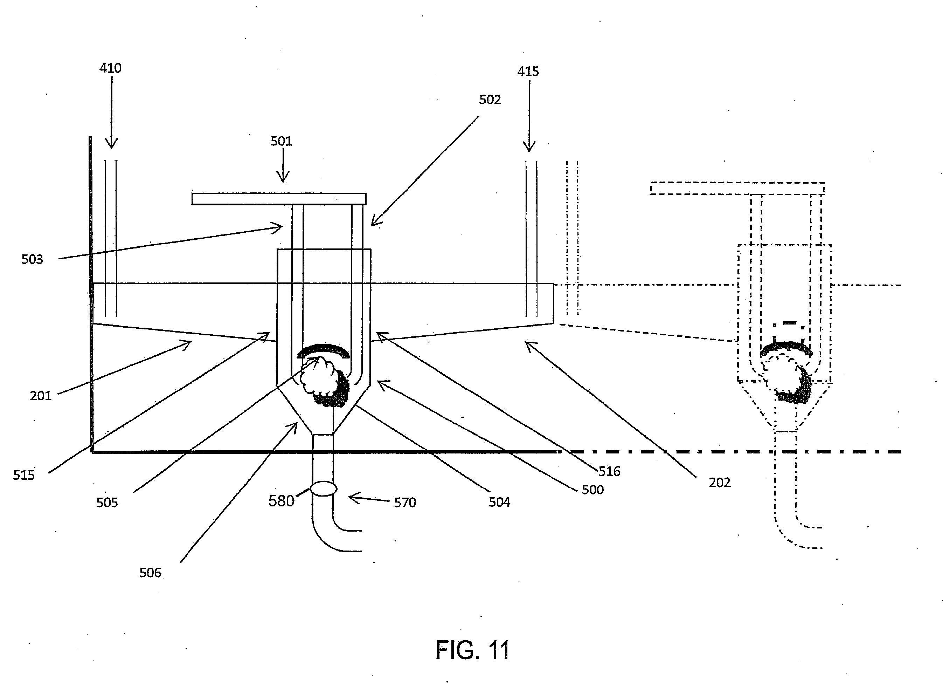

A further benefit of the current system and methodis that the materials settled in the grit box 500 can be removed as part of the routine operation of the clarification system by the scouring of the IFS with a fluid.With reference to the exemplary embodiment of FIG. 11, materials, in one embodiment fluid is pumped through pipes 410, 415 to scour the IFS troughs and grit box. The materials settled in the grit box 500 can be removed via discharge pipe 570 in liquid communication with the IFS. Fluid communication via discharge pipe 570 is controlled by valve 580. Valve 580 may be a manually operated valve. In an alternate embodiment, valve 580 is electronically controlled by a supervisory control and data acquisition system SCADA 900 which provides a signal via communication channel 910 to open and close the valve 580. SCADA systems and electronically controlled valves are well known in the art. Materials settled in grit box 500 may have viscosity low enough flow from the grit box under the influence of gravity. In one embodiment, valve 580 is opened to remove the settled materials when the IFS is full of influent. The head pressure from the influent assists in moving the settled solids from the grit box 500 through the discharge pipe 570. In an alternative method for evacuating and scouring the IFS, valve 580 is opened and the IFS troughs 201, 202 are scoured with liquid to evacuate solids from the entirety of the IFS.

The influent feed trough may also have a separate valved drain pipe (one or more additional drain pipes) to direct accumulated materials to alternate or the same type of process as the grit box materials. For example, in one embodiment, with reference to FIG. 6, materials settled in the IFS troughs, 201, 202 are removed separately from the materials settled in the grit box 500 via optional discharge pipes 578. 579. The materials settling in the IFS troughs 201, 202 and grit box 500 have may have differing composition due to the differing fluent rise rates in the IFS troughs 201, 202 and grit box 500 as well as the kinetics associated with floc formation. Fluid communication via discharge pipes 578, 598 are controlled by valves 588, 589 (typically in embodiments where valves 588, 589 are used, they are present in addition to valve 580). Valves 588, 589 may be manually operated valves. In an alternate embodiment, valves 588, 589 are electronically controlled by a supervisory control and data acquisition system SCADA 900 which provides a signal via communication channels 911, 921 to open and close valves 588, 589.

In some embodiments, the influent stream is pumped at an overall flow rate sufficient to accommodate the maximum projected throughput that the plant will handle, such as during a flood or severe rainstorm. In a municipal waste water treatment plant the velocity of the influent in pipes 14, 15, 15' (FIG. 1 and FIG. 2), 501, 502, 503 (FIG. 6, FIG. 7, FIG. 8A, FIG. 8B, FIG. 9A, FIG. 9B) should be fast enough to avoid plugging the influent pipes with solids, but not so fast as to scour and wear pipes and pipe elbows. Typical influent flow velocities are in the range of 3 to 8 feet per second. The diameter of the pipes 501, 502, 503 can be selected to avoid plugging with gross solids and provide a high velocity to create good mixing of the streams in the mixing zone 504.

Example: In one exemplary embodiment, the IFS separates particulate matter with a 100 mesh size or larger from the influent. Influent is pumped to the grit box 500 via pipe 501 at a constant flow rate of 375 GPM. Pipe 501 is 6 inches in diameter and pipes 502, 503 are 4 inches in diameter. The upper portion of grit box 500 above the grit hopper 506 has dimensions of 4' in the direction parallel to the longest length of the IFS and 2.25'in the direction perpendicular to the longest length of the IFS, resulting in a total surface area of 9square feet. The resultant influent rise rate in the upper portion of the grit box 500 is 0.0928 feet per second (FPS), resulting in the settling of gel net, grits and solids with settlingrates faster than .0928 FPS settling predominantly in the grit hopper 506. Typical 50 mesh particles have a settling rate of 0.160 feet per second. The IFS troughs, 201, 202 are sized to have an influent rise rate substantially less than the grit box 500 influent rise rate. Each IFS troughs 201,202 has a dimension of 10.5' in the direction parallel to the longest dimension of the IFS and a dimension of 1' in the direction perpendicular to the longest dimension of the IFS. The resultant influent rise rate in the IFS troughs 201, 202 is .0199 feet per second at the bottom of the IFS Troughs. Typical 100 mesh particles have a settling rate of 0.042 feet per second. The influent rise rate in the IFS trough may be further decreased as the influent rises by angling the IFS trough walls 207 away from the vertical as shown with reference to Figure 5B. In one embodiment the IFS trough wall 207 is angles at 20 degrees from the vertical.

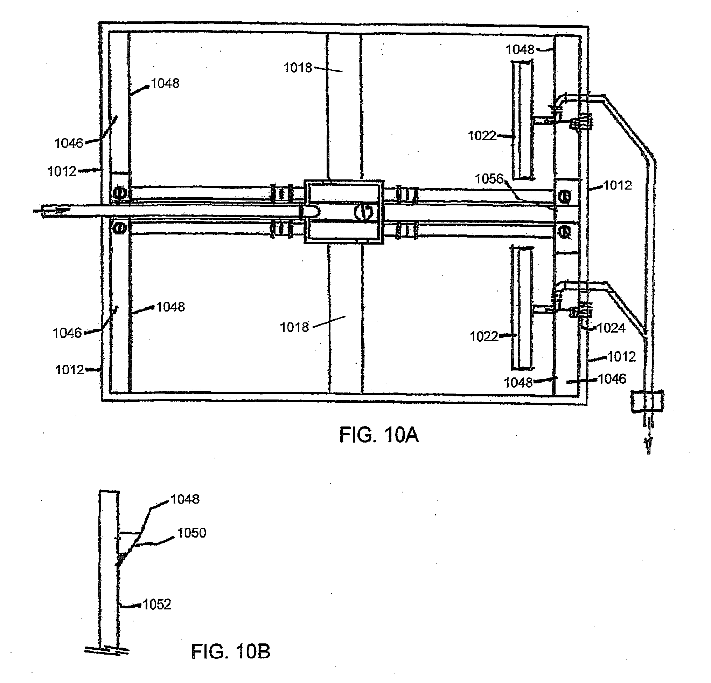

Fluid Communication between the IFS and the Clarification Settling tank: In one embodiment, the IFS is separated from the primary settling tank by a solid wall that acts as a weir as described in '942 patent. With reference to Figure 1 and columns 5, lines 27- of the '942 patent, the influent flow rises in each fed IFT (Influent Feed Trough) 1046 until it spills uniformly across the length of the smooth rounded weir 1048 of the IFT 1046. As described in '942 patent, IFTs 1046 may be disposed either longitudinally of tank 1012 or transversely, as shown in FIG. 10A. The influent flow then rises in each fed IFT 1046 until it spills uniformly across the length of the smooth rounded weir 1048 of the IFT 1046. FIG. 10B is an elevational cross-sectional partial view of FIG. 10A showing more detail of the smooth rounded weir 1048. A first portion of the influent liquid flows down the exterior face 1050 of the IFT 1046 to the wall 1052, down wall 1052 to the inclined base slab 1054 and towards the sludge trough 1018. A second portion of the influent feed having dense solids may free fall to base slab 1054 and be directed towards sludge hopper 1018 via the liquid coming down the face of wall 1052. This liquid is then discharged via gravity through screened decanter 1022, trapping the solids in the tank. If the flow rate of the liquid influent exceeds the discharge rate, the liquid level will rise. An overflow is located at an engineered distance from the top of the common wall separating tanks 1012. Overflow is positioned above the IFTs so that the overflow is uniformly distributed across the tank.

In another embodiment the IFS is separated from the primary settling tank by pipes, optionally equipped with pumps, to transmit fluids to the primary settling tank. The flow and volume of influent into the IFS is monitored and periodically grit-free fluid with suspended BOD is decanted, or otherwise transferred, into the interior of the primary settling tank for further treatment. In one embodiment fluids are decanted as described in the '505 patent, '864 patent and '197 patent application. Numerous other methods for transfer of fluid from one vessel to another are well known in the art.

In another embodiment the IFS is separated from the primary settling tank by a bar screen 210 as show in FIG. 5Bwith reference to item 14 of the '099 application.

The velocities at the bar rack located in the feed trough are significantly lower than the design standard of 1 to 3-FPS required for conventional headwork designs. These high velocities cause bar screens to clog, requiring maintenance and causing downtime for operation of the waste water treatment plant. In addition, elongated solids (sticks, condoms, tampon applicators, swizzle sticks) will align with the flow and pass through to openings of existing screens. The liquid entering the IFT makes a 90 degree turn to flow through the screen and over the trough weir thus preventing the elongated solids from passing. The 90 degreeturn also stops the forward momentum of the solids helping them to settle as the surface area increases with the rising liquid level due to the trough being wider at the top than the bottom. The bar rack extends below the weir elevation thus providing a larger surface area resulting in lower velocities.

While the present system and method has been particularly shown and described with reference to an alternative mode as illustrated in the drawing, it will be understood by one skilled in the art that various changes in detail may be affected therein without departing from the spirit and scope of the application as defined by the claims.

## Claims

1. An influent feed system to classify and separate particulate matter and solvated materials from an influent stream comprising:
one or more influent feed troughs in fluid communication with a clarification tank, said influent feed troughs having dimensions such that aninfluent feed trough fluid rise rate that is less than a settlingrate of materials to be deposited in the influent feed troughs;
one or more grit boxes in fluid communication with said one or more influent feed troughs, said one or more grit boxes having grit box dimensions which result in a grit box fluid rise rate that is slow relative to the settlingrate of materials to be deposited in said one or more grit boxes, said one or more grit boxes comprising a hopper for accumulation of the materials to be deposited, said hopper having a drainage pipe and a valve that controls communication of materials between the influent feed system and said drainage pipe;and
an influent stream delivery mechanism delivers said influent stream at a predetermined and a substantially constant flow rate, said influent stream separated into two or more streams and recombined under pressure in said grit boxes.

2. The influent feed system of claim 1, further comprising an apparatus to add one or more flocculants to said influent stream before said influent stream enters said one or more influent feed troughs.

3. The influent feed system of claim 1, further comprising an apparatus to add one or more flocculants to said influent stream as said influent stream separated into two or more streams recombines under pressure in the grit box.

4. The influent feed system of claim 1, wherein said influent stream delivery mechanism comprises a reservoir which accumulates and stores influent, and one or more pumps that pump the influent to said influent feed system and a signal source which turns the pumps on.

5. The influent feed system of claim 1, wherein said influent stream delivery mechanism comprises:
a reservoir to accumulate and store influent, said reservoir elevated relative to said influent feed system and in fluid communication with said influent feed system; and
a control valve disposed between said reservoir and said influent feed system, said control valve configured to deliver said influent stream at a pre-determined and substantially constant flow rate, saidcontrol valve opening in response to a signal source to permit influent to traverse under an influence of gravity to said one or more grit boxes.

6. The influent feed system of claim 5, wherein said reservoir comprises a holding tower.

7. The influent feed system of claim 5, further comprising a flow meter that measures a flow rate of fluid wherein the system closes said valve in response to said flow rate falling below a predetermined rate.

8. The influent feed system of claim 1, wherein said influent feed system comprises one or more screen box assemblies that discharge influent from a settling tank after separation of solids from said influent stream.

9. The influent feed system of claim 1, wherein at least one of said one or more influent feed troughs further comprises one or more additional drain pipes in fluid communication with said at least one of said one or more influent feed troughsand another valve disposed between said at least one of said one or more influent feed troughsand an outflow end of said at least one of saidone or moreadditional drain pipes controls a flow of materials through said outflow end.

10. A grit box to classify and separate particulate matter and solvated materials from an influent stream comprising:
an upper portion and a lower portion, said upper portion having a fluid discharge mechanism, said lower portion coupled to a drainage pipe, said lower portion having a valve that controls communication of materials between an influent feed system and said drainage pipe, and wherein one or more dimensions of said upper portion and said lower portion causes a fluid rise rate slow relative to asettlingrate of materials to be deposited in said grit box;
a deflection plate positioned between said upper portion and said lower portion;
an influent stream delivery mechanism configured to deliver said influent stream an at a predetermined and substantially constant flow rate, said influent stream separated into two or more streams and recombined under pressure in said lower portion; and
a hopper that accumulates one or more deposited materials.

11. The grit box of claim 10, wherein said influent is recombined under pressure in said lower portion underneath said deflection plate.

12. The grit box of claim 11, wherein said influent is recombined in a turbulent mixing zone created by streams under pressure from two or more opposing pipes.

13. The grit box of claim 12, wherein said influent is recombined in said turbulent mixing zone created by streams under pressure directed substantially towards each other from three or more opposing pipes that extend from a manifold at about an equal angular spacing.

14. The grit box of claim 13, wherein three opposing pipes extend from said manifold at about a 120 degree spacing.

15. The grit box of claim 13, wherein four opposing pipes extend from said manifold at about a 90 degree spacing.

16. The grit box of claim 13, wherein each of said opposing pipes comprises a first substantially 90 degree bend about where each of said opposing pipes is coupled to said manifold and a second substantially 90 degree bend that directs streams under pressure substantially towards each other.

17. The grit box of claim 13, wherein said opposing pipes comprisefour opposing pipes that extend from said manifold at about a 90 degree spacing and each of said opposing pipes includes a first substantially 90 degree bend about where each of the opposing pipes is coupled to said manifold, and a first two opposing pipes of said four opposing pipes comprise a second upwards bend of greater than 90 degrees that direct the streams under pressure in an upwards direction and substantially towards each other and a two remaining opposing pipes of said four opposing pipes comprise a second downward bend of less than 90 degrees that directs the streams under pressure in a downwards direction and substantially towards each other and the streams emanating from said first two opposing pipes.
